# EUROPÄISCHE PATENTSCHRIFT

(11) **EP 2 619 138 B1**
(45) Veröffentlichungstag und Bekanntmachung des Hinweises auf die Patenterteilung: **12.11.2014**
(21) Anmeldenummer: 11808157.9
(22) Anmeldetag: 19.09.2011
(51) Int. Cl.: C01G 23/047, C01G 23/08, B28B 1/50, B01J 20/28

(54) **PORÖSES, SPHÄRISCHES TITANDIOXID**
POROUS, SPHERICAL TITANIUM DIOXIDE
DIOXYDE DE TITANE POREUX SPHÉRIQUE

(30) Priorität: 22.09.2010 DE 102010041189
(43) Veröffentlichungstag der Anmeldung: 31.07.2013
(73) Patentinhaber: Sachtleben Chemie GmbH, 47198 Duisburg (DE)
(72) Erfinder: ROHE, Bernd, 47445 Moers (DE); SCHULTE, Markus, 45145 Oberhausen (DE); SPITZWIESER, Christian, 47495 Rheinberg (DE)
(74) Vertreter: Nobbe, Matthias
(86) Internationale Anmeldenummer: PCT/DE2011/075226
(87) Internationale Veröffentlichungsnummer: WO 2012/062303

(56) Entgegenhaltungen:
- WO-A1-2008/076082
- GB-A- 1 176 046
- US-A1- 2006 263 291

## Beschreibung

Die Erfindung betrifft ein neuartiges Titandioxidmaterial, Verfahren zu dessen Herstellung und dessen Verwendung als Trägermaterial in Mehrphasensystemen.

Grundsätzlich unterliegt ein teilchenförmiges Material physikalischen und chemischen Einflüssen, die die Beständigkeit und die längerfristige Eignung des Materials beeinflussen. So neigen insbesondere poröse Metalloxidteilchen bei Druckbeaufschlagung zu einer Instabilität der Partikel und insbesondere bei Beaufschlagung mit wässrigen Lösungsmittelsystemen, insbesondere bei sauren oder basischen Systemen, zur Rehydratisierung der Metalloxidoberfläche. Die Instabilität der Partikel und die daraus resultierenden Partikelbrüche als auch die Rehydratisierung der Oberfläche haben ein Verklumpen der Partikel zur Folge. Infolgedessen wird die Strömung in einer Schüttung der Teilchen erschwert, und mit der Zeit werden so Verstopfungen in der Schüttung hervorgerufen, die die Schüttung unbrauchbar machen.

Darüber hinaus ist bei Prozessen, bei denen eine Abtrennung der Teichen erforderlich ist, diese Abtrennung der infolge Partikelbruch entstandenen feinen Partikeln nur mit aufwändiger Technik möglich, die Anschlämmung macht den Wiedereinsatz des Materials nahezu unmöglich.

Grundsätzlich bestehen für eine Vielzahl von großtechnischen Verfahren und Applikationen wie z. B. Fischer-Tropsch-Verfahren, z.B. Umesterungsreaktionen sowie auch in der Chromatographie Anforderungen hinsichtlich insbesondere der Partikelstabilität der Materialien.

Bei diesen Verfahren sind auch die Porengröße und deren Verteilung zum einen hinsichtlich der Stabilität als auch der prozeßtechnischen Eignung und Reaktivität von Bedeutung.

Im Stand der Technik ist eine Vielzahl von Metalloxidmaterialien für chemische und katalytische Anwendungen bekannt. So offenbart die US 4422960 ein teilchenförmiges Material zur Hydrobehandlung eines schweren Kohlenwasserstofföls, wobei das Material einen Gehalt an Metalloxid aus Aluminiumoxid, Siliciumdioxid, Titandioxid, Boroxid, Zirkonoxid, Siliciumdioxid-Aluminiumoxid, Siliciumdioxid-Magnesiumoxid, Aluminiumoxid-Magnesiumoxid, Aluminiumoxid-Titandioxid, Siliciumdioxid-Titandioxid, Aluminiumoxid-Boroxid hat.

Seit der Anmeldung dieser US 4422960 hat es eine ganze Reihe von Untersuchungen und Erfindungen gegeben, die die Verbesserung der Teilcheneigenschaften auf Basis von Metalloxiden zum Ziel hatten. Zufriedenstellende Ergebnisse sind allerdings nur in einem überschaubaren Umfang erzielt worden. Es besteht daher ein Bedarf an teilchenförmigem Material, das insbesondere eine verbesserte Partikelstabilität bei gleichzeitig optimierter Porengröße und deren Verteilung besitzt.

Seitens der Erfinder ist es nun gelungen, ein teilchenförmiges Material auf Metalloxidbasis zu entwickeln, das unter überkritischen, hydrothermalen Bedingungen und in wässrigen und protischen Medien überraschenderweise chemisch und physikalisch stabil ist.

Erfindungsgemäß wird so ein Material bereitgestellt, das diese Anforderungen erfüllt. Genauer betrifft die Erfindung ein poröses, sphärisches Titandioxid mit einem TiO₂-Gehal von mindestens 99,0 Gew.-%, und mit
- einer Partikelgröße d₅₀ im Bereich von 30 bis 350 µm,
- einer engen Partikelgrößenverteilung (B90/10) im Bereich von maximal 120 µm,
- einem Porendurchmesser von 1 bis 30 nm,
- einem Porenvolumen von mindestens 0,1 cm³/g,
- einer Oberfläche von 30 bis 300 m²/g (BET).

Das erfindungsgemäße teilchenförmige Material ist in wässrigen Lösungen über den gesamten pH-Bereich 0 bis 14 chemisch und mechanisch stabil. Da in dem erfindungsgemäßen Material keine Additive enthalten sind, die die Stabilität nachteilig beeinflussen können, ist das erfindungsgemäße Material durch einen Gehalt an TiO₂ von mehr als 99 Gew.-% gekennzeichnet.

Das erfindungsgemäße Material zeichnet sich insbesondere dadurch aus, dass die chemische Stabilität und physikalische Stabilität ohne den Einsatz von Bindemitteln und ohne organische Verbindungen bei der Herstellung erreicht werden können, und das erfindungsgemäße Material somit frei von solchen Verbindungen oder Rückständen davon ist. Untersuchungen der Erfinder zur hydrothermalen Stabilität haben ergeben, dass das erfindungsgemäße Material selbst unter stringenten HT-Bedingungen von mehr als 40 bar bei einer Temperatur von mehr als 250°C stabil ist und keine Feinkornbildung zeigt.

Von Vorteil ist ein erfindungsgemäßes Material mit einer Partikelgröße d₅₀ im Bereich von 40 bis 250 µm, insbesondere im Bereich von 60 bis 150 µm, ganz besonders 80 bis 120µm. Die Partikelgröße des Materials nach der Erfindung kann dabei besonders in einem Bereich von dem 0,25 bis 1,5-fachen des d₅₀-Wertes um diesen d₅₀-Wert liegen, solange die zuvor genannten Grenzen eingehalten werden. Die Erfinder haben dabei eine enge Partikelgrößenverteilung (B90/10) im Bereich von maximal 120 µm als vorteilhaft erkannt.

Das erfindungsgemäße Material hat einen Porendurchmesser im Bereich von 1 bis 30 nm , wobei eine Porengröße im Bereich von 1-20 nm, besonders 4-20 nm sich zum einen fördernd auf die Struktur und Stabilität einer Schüttung des erfindungsgemäßen Materials auswirkt, zum anderen ein ausreichendes Porenvolumen für die gewünschte Anwendung bereitstellt.

In der Regel beträgt das Porenvolumen mindestens 0,1cm³/g erfindungsgemäßes Material, besonders mindestens 0,12 cm³/g. In der Regel ergibt das erfindungsgemäße Herstellungsverfahren eine Obergrenze des Porenvolumens von 0,4 cm³/g erfindungsgemäßes Material.

Dabei ergibt sich eine spez. Oberfläche im Bereich von mindestens 30, besonders mindestens als 60 m³/g und als Obergrenze bis 300 m²/g, insbesondere im Bereich von 70 bis 150 m²/g (BET). Wenn das im erfindungsgemäßen Herstellungsverfahren erhaltene Sprühkorn weiter kalziniert werden soll, kann die spez. Oberfläche nach der Kalzinierung auf einen niedrigeren Wert, verglichen mit dem Sprühkorn, sinken. Diese Abnahme der spez. Oberfläche kann sich dann im Bereich von 20 bis 50% des Ausgangswertes bewegen.

Das erfindungsgemäße teilchenförmige Material kann mittels des erfindungsgemäßen Verfahrens hergestellt werden. Dazu wird eine wässrige Suspension mit einem Gehalt von 1-50 Gew.-% feinteiligem, hochoberflächenreichem Titandioxid eingesetzt und in einen Sprühturm, der in verschiedenen Modifikationen, insbesondere einer Springbrunnenkonfiguration, betrieben werden kann, eingesprüht und so das Lösungsmittel verdampft.

Dabei werden Fördergeschwindigkeit der Suspension, Düsenform, Temperatur und Luftgeschwindigkeit im Sprühtrockner so gewählt, dass vereinzelte/einzelne Tröpfchen der Suspension, d.h. ohne Kontakt zu "Nachbartröpfchen", in einer Größe von 700 bis 1200 µm in den Sprühturm eingebracht und getrocknet werden.

Anstelle des eingesetzten Titandioxids ist es auch möglich, hydratisierte Vorformen anderer Metalloxide wie Al₂O₃, SiO₂ oder ZnO oder Gemischen davon einzusetzen und die Parameter der Fördergeschwindigkeit der Suspension, Düsenform, Temperatur und Luftgeschwindigkeit im Sprühtrockner so einzustellen, dass vereinzelte/einzelne Tröpfchen der Suspension, d.h. ohne Kontakt zu "Nachbartröpfchen", in einer Größe von 700 bis 1200 µm in den Sprühturm eingebracht und zum Sprühkorn getrocknet werden und dann nach jeweiliger Anforderung an das Material gesiebt und/oder kalziniert werden.

Die als Ausgangsmaterial hier bevorzugt eingesetzte wässrige Suspension von Titandioxid kann besonders aus neutral gewaschener im Handel erhältlicher Metatitansäure erhalten werden, die, falls gewünscht, unter Einsatz von Nass-Mahlvorrichtungen wie Perlmühlen mit ZrO₂-Perlen mit einem Durchmesser von < 0,5 mm, besonders 0,1 mm, redispergiert wird. Ein trockenes Mahlen ist in der Regel nicht erforderlich.

Der Gehalt an feinteiligem, hochoberflächenreichem Titandioxid in der eingesetzten Suspension wird in Abhängigkeit von der gewünschten Partikelgröße gewählt und beträgt vorteilhaft 5 bis 25 Gew.-%. Das hochoberflächenreiche Titandioxid hat dabei erfindungsgemäß eine Oberfläche von mindestens 250 m²/g, vorteilhaft mindestens 280 g/m², und höchstens 400 m²/g, besonders 350 m²/g

Es ist von besonderem Vorteil, wenn das eingesetzte feinteilige, hochoberflächenreiche Titandioxid eine hohe Anzahl an freien Hydroxyl-Gruppen, in der Regel von mehr als 6 OH-Gruppen/ nm², vorteilhaft mehr als 10 OH-Gruppen/ nm², an der Oberfläche der Suspensionsteilchen aufweist. Die Anzahl der OH-Gruppen kann über das Verfahren nach Zerewittinoff bestimmt werden. Dazu wird unter Schutzgas eine definierte Menge an trockenem TiO₂ in einem Gefäß in einem inerten org. Lösungsmittel vorgelegt und nach der Zugabe von Methyl-Lithium die Menge an gebildetem Wasserstoff bestimmt. Bei Kenntnis der spez. Oberfläche des eingesetzten TiO₂ kann dann die Anzahl der OH-Gruppen pro nm² errechnet werden.

Die wässrige Suspension wird bei einer Springbrunnenkonfiguration aus wenigstens einer im Trockenturm nach oben gerichteten Druckdüse versprüht und im Gegenstrom dazu ein trocknendes inertes gasförmiges Medium, das über einen Brenner erhitzt wurde, in den Trockenturm eingeleitet. Die Eintrittstemperatur des gasförmigen Mediums, vorzugsweise Luft, beträgt dabei in der Regel 400 bis 600 °C, vorzugsweise 450 bis 550 °C.

Die getrockneten Teilchen werden im Trockenturm über eine Sammeleinrichtung und mitgerissene Teilchen in wenigstens einem Abscheider aufgefangen. Die Abscheider können z.B. Zyklone, Naß-, Trocken- oder Elektrofilter sein.

Beim Einbringen der wässrigen Suspension in den Sprühtrockner werden Fördergeschwindigkeit der Suspension, Düsenform, Temperatur und Luftgeschwindigkeit im Sprühtrockner so gewählt, dass vereinzelte/einzelne Tröpfchen der Suspension, d.h. ohne Kontakt zu "Nachbartröpfchen", in der Regel in einer Größe von 700 bis 1200 µm in den Sprühturm eingebracht und getrocknet werden. Je nach Konzentration der eingesetzten wässrigen Suspension kann die gewünschte Partikelgröße in Abhängigkeit von den vorgenannten Parametern eingestellt werden. Die Parameter der Fördergeschwindigkeit der Suspension, Düsenform, Temperatur und Luftgeschwindigkeit können dabei in Abhängigkeit von der eingesetzten Sprühtrocknungsvorrichtung vom Fachmann bestimmt werden und auf die verwendete Suspension eingestellt werden. Beispielhaft kann eine Sprühtrockungsanlage mit einem Speisepumpendruck von 4-12 bar, insbesondere 8 bar, einem Düsendurchmesser von 1-4 mm, insbesondere 2-3 mm, einer Konzentration der Lösung/Suspension von 1-50 Gew.-%, besondere 5-20 Gew.-% und ganz besonders 8-15 Gew.-% und einem Durchsatz an Suspension von 0,3-0,8 m³/h, insbesondere 0,4-0,6 m³/h betrieben werden. Des Weiteren ist es vorteilhaft, eine Sprühdüse mit einem Sprühkegelwinkel von 12° bis 75° insbesondere 45° bis 60° im Sprühturm einzusetzen. Die Heißgaszufuhr in den Sprühturm kann von allen Seiten erfolgen, wobei die die Heißgaszufuhr von oben vorteilhaft ist.

Die Bestimmung der Tröpfchengröße kann mittels eines Drying Kinetics Analyzer der Fa. Gea-Niro oder mittels eines Phasen-Doppler-Anemometer (PDA) als optische Messsysteme, die die Geschwindigkeit und den Durchmesser von kugelförmigen Partikeln/Tropfen berührungslos und simultan messen, erfolgen. Die Messverfahren und -parameter sind dem Fachmann bekannt.

Falls die Trocknung im Sprühturm nicht schon ein Material mit einem Anteil an Feinkorn (< 30µm), bzw. Grobkorn (> 350µm) von weniger als 5 Gew.-% ergibt, kann im Anschluss an die Trocknung eine Abtrennung von Feinstpartikeln (<30 µm) sowie Grobkorn (>350 µm) erfolgen, die zweckmäßigerweise über eine Siebung/Sichtung oder Sedimentation stattfindet.

Falls gewünscht, kann erhaltene TiO₂-Sprühkorn bei einer Temperatur im Bereich von 400° bis 600°C über einen Zeitraum von 30 bis 300 Minuten kalziniert werden, um die Porenstruktur zu festigen. Während der Kalzinierung werden im Wesentlichen keine Agglomerate von TiO₂-Teilchen gebildet. Lediglich ein kleiner Anteil von in der Regel weniger als 5 Gew.-% von Grobkorn mit einer Korngröße von mehr als 350µm kann gebildet werden, der, wie zuvor beschrieben abgetrennt werden kann.

Der geringe Anteil an Anteil an Feinkorn (< 30µm), bzw Grobkorn (> 350µm) von weniger als 5 Gew.-% bei Sprühkorn als auch dem kalzinierten Material belegen die Überlegenheit der erfindungsgemäß entwickelten Kombination des Herstellungsverfahren mit dem Ausgangsmaterial.

Das erhaltene Titandioxid -Korn ist geeignet, um als Träger für aktive Substanzen in Mehrphasen-Systemen, beispielsweise in der Chromatographie oder Katalyse, eingesetzt zu werden. Dabei wirkt sich die Rundheit und Gleichmäßigkeit der Partikel positiv auf die Pulverschüttung und den Durchfluss in diesen Mehrphasen-Systemen wie auch bei Suspensionssystemen und Festbettanordnungen aus.

Die im Rahmen der Erfindung zur Bestimmung der Parameter verwendeten Messverfahren sind wie folgt. Die Partikelgröße und Partikelgrößenverteilung werden mittels Laserbeugung analog der ISO-Norm 13320 durchgeführt. Zur Probenpräparation wird eine 1 %ige wässrige Suspension mittels Glasrührer hergestellt. Weiterhin kann die Partikelgröße durch Auswertung von Lichtmikroskopie- und REM-Bildern bestimmt werden. Hier werden die auf den Photographien abgelichteten Partikel einzeln vermessen und die Daten statistisch aufgearbeitet. Die Partikeloberfläche wird nach BET-Mehrpunkt-Methode analog der ISO 9277 bestimmt. Die Porendurchmesser und Porenvolumen werden mittels Gasadsorption analog der DIN 66135 bestimmt.

Die Erfindung wird anhand des folgenden Beispiels weiter erläutert.

### Herstellunasbeispiel

Ein gewaschener und mit 50%iger Natronlauge auf pH 7 neutralisierter Metatitansäure-Filterkuchen wird mittels Perlmühle unter Einsatz von 0,5 mm großen Zirkonoxidperlen dispergiert. Die entstehende Dispersion wird durch Zugabe von Wasser auf einen Feststoff-Anteil von 20 Gew.-% Titandioxid eingestellt und dann über einen Sprühturm mit folgenden Bedingungen getrocknet:
- Gaseintrittstemperatur 500°C
- Lufterhitzer Erdgasfeuerung
- Grobgutaustrag
- Zyklonaustrag
- Verdüsung der Suspension in Springbrunnenkonfiguration

Das erhaltene Sprühkorn zeichnet sich durch folgende physikalische Daten aus:

| | |
|---|---|
| d50: | 112 µm |
| B90/10: | 104 µm |
| Spezifische Oberfläche (BET): | 97,7 m²/g |

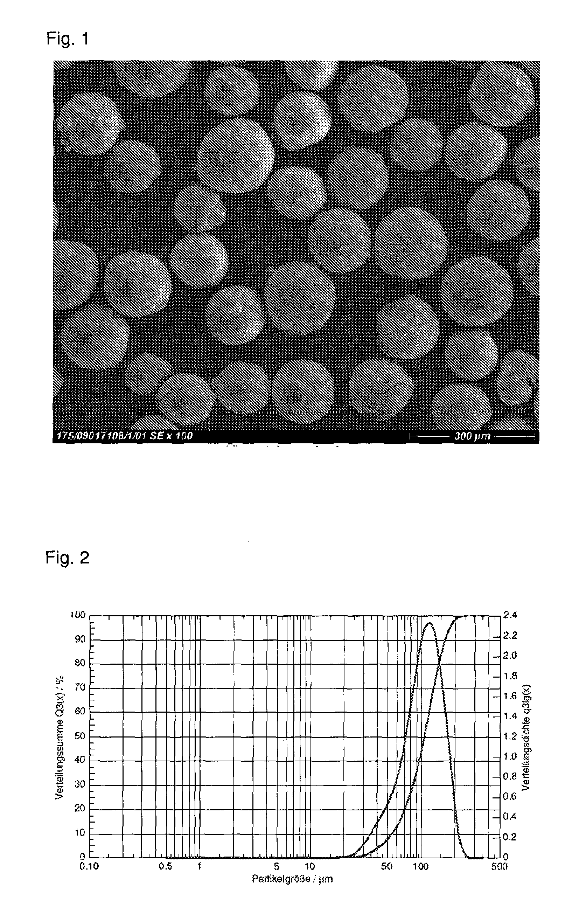

Es zeigt sich das die einzelnen Partikel sphärisch geformt sind, nahezu kein Feinanteil vorhanden ist und der Anteil an strukturgeschädigten Partikeln sehr gering ist (Fig. 1).

Das Sprühkorn wurde anschließend bei 450 °C für 3,5 Stunden in einem Batchofen kalziniert, und danach wurde das kalzinierte Sprühkorn über eine fraktionierte Siebung von Partikeln kleiner 30 µm und größer 200 µm befreit.

Das so hergestellte kalzinierte Material besitzt folgende physikalische Daten:

| | |
|---|---|
| d50: | 106 µm |
| B90/10: | 111 µm |
| Porenvolumen: | 0,21 cm³/g |
| Porendurchmesser: | 5,8 nm |

Fig. 1 zeigt eine REM-Aufnahme des so erhaltenen Materials und die gleichmäßige sphärische Struktur des Materials als auch dessen geringen Gehalt an Fein- und Grobkorn. Die Korngrößenverteilung ist in Fig. 2 gezeigt.

### Stabilitätsuntersuchung des in Beispiel 1 hergestellten Materials

Zur Untersuchung der physikalischen und chemischen Stabilität des in Beispiel 1 hergestellten Materials wurde das Material zwei Stabilitätstests unter hydrothermalen Bedingungen unterzogen.

Dazu wurden 140 g eines nach der Kalzinierung wie im o. a. Beispiel erhaltenen Materials mit einer Partikelgröße (d₅₀) von 110µm bei einer Porengröße 60 Ä (dₚ/Å) in 1200 ml TE-Wasser durch Schütteln (Dauer 30 sec.) in einem verschlossenen Gefäß suspendiert.

Die so erhaltene Suspension wurde sofort in einen Glas-Vorlagebehälter eines 21-Autoklaven überführt und ohne Rührung einer HT-Behandlung unter Bedingungen bei 10 bar und 180 °C über 6 Stunden unterzogen (HT 1). Nach der Entnahme einer Teilmenge des so erhaltenen Materials wurde diese Teilmenge einer Festigkeitsuntersuchung unterzogen.

Ein anderer Teil des Materials wurde durch ein erneutes Aufschütteln (30 sec.) resuspendiert, zurück in den Glasvorlagebehälter des Autoklaven überführt und ohne Rührung einer weiteren HT-Behandlung unter Bedingungen bei 40 bar und 255 °C über 8 Stunden unterzogen (HT 2).

Die nach den HT-Behandlungen (HT 1 und HT 2) jeweils erhaltene Suspension wurde nach der Sedimentation anhand des wässrigen Überstandes visuell beurteilt. In beiden Fällen zeigte nach einer sehr schnellen Sedimentation der Teilchen ein klarer, von Feinstpartikeln freier, wässeriger Überstand. Da üblicherweise minimalste Feinanteile bereits einen milchig trüben Überstand ergeben, belegen diese Untersuchungen, daß das erfindungsgemäße Material unter überkritischen, hydrothermalen Bedingungen in wässrigen und protischen Medien chemisch und physikalisch stabil ist. Aufgrund dieser Eigenschaften ist das erfindungsgemäße Material als Trägermaterial in Mehrphasensystemen hervorragend geeignet, da es nicht zu Partikelbrüchen oder einer Rehydratisierung der Oberfläche neigt. Somit wird ein Verklumpen der Partikel verhindert, und die Strömung in einer Schüttung der Teilchen bleibt unbeeinflusst.

Mittels erfindungsgemäßen Verfahrens ist somit ein erfindungsgemäßes TiO₂-Sprühkorn erhältlich, bei dem gezielt die Tropfengröße und somit auch die Sprühkorngröße eingestellt werden können und das erfindungsgemäßes TiO₂-Sprühkorn zudem noch Binder-frei und ohne Zusatz organischer Additive hergestellt werden kann. Ein solches Verfahren und Material sind einzigartig und im Stand der Technik nicht bekannt.

## Patentansprüche

1. Teilchenförmiges poröses, sphärisches Titandioxid mit einem TiO₂-Gehalt von mindestens 99,0 Gew.-%, und mit
- einer Partikelgröße d₅₀ im Bereich von 30 bis 350 µm,
- einer engen Partikelgrößenverteilung B(90/10) im Bereich von maximal 120 µm,
- einem Porendurchmesser von 1 bis 30 nm,
- einem Porenvolumen von mindestens 0,1 cm³/g, und
- einer Oberfläche von 30 bis 300 m²/g (BET).

2. Teilchenförmiges poröses, sphärisches Titandioxid nach Anspruch 1 mit einer Partikelgröße d₅₀ im Bereich von 40 bis 250 µm, insbesondere im Bereich von 60 bis 150 µm, ganz besonders im Bereich von 80 bis 120µm.

3. Teilchenförmiges poröses, sphärisches Titandioxid nach Anspruch 1 oder 2 mit einer Porengröße im Bereich von 1 bis 30 nm, besonders von 1 bis 20 nm, ganz besonders von 4 bis 20 nm.

4. Verfahren zur Herstellung eines teilchenförmigen porösen, sphärischen Titandioxid nach einem der Ansprüche 1 bis 3, das den Schritt umfasst, eine wässrige Suspension mit einem Gehalt von 1-50 Gew.-% feinteiligem, hochoberflächenreichem Titandioxid, in einen Sprühturm einzubringen, wobei Fördergeschwindigkeit der Suspension, Düsenform, Temperatur und Luftgeschwindigkeit im Sprühtrockner so gewählt werden, dass vereinzelte/einzelne Tröpfchen der Suspension, d.h. ohne Kontakt zu "Nachbartröpfchen", in einer Größe von 700 bis 1200 µm in den Sprühturm eingebracht und getrocknet werden.

5. Verfahren zur Herstellung eines teilchenförmigen porösen, sphärischen Titandioxid nach Anspruch 4, bei dem der Sprühtrockner in einer Springbrunnenkonfiguration betrieben wird.

6. Verfahren zur Herstellung eines teilchenförmigen porösen, sphärischen Titandioxid nach Anspruch 4 oder 5, bei dem das eingesetzte feinteilige, hochoberflächenreiche Titandioxid eine hohe Anzahl an freien Hydroxyl-Gruppen, in der Regel von mehr als 10 OH-Gruppen/ nm², vorteilhaft mehr als 20 OH-Gruppen/nm² an der Oberfläche der Suspensionsteilchen aufweist.

7. Verwendung des teilchenförmigen porösen, sphärischen Titandioxids nach einem der Ansprüche 1 bis 3 in Mehrphasen-Systemen.

8. Verwendung des teilchenförmigen porösen, sphärischen Titandioxids nach nach Anspruch 7 als Träger für aktive Substanzen.

## Claims

1. A particulate porous spherical titanium dioxide with a TiO₂ content of at least 99.0 % by weight and with
- a particle size d₅₀ in the range of 30 to 350 µm,
- a tight particle size distribution (B 90/10) in the region of a maximum of 120 µm,
- a pore diameter of 1 to 30 nm,
- a pore volume of at least 0.1 cm³/g, and
- a surface area of 30 to 300 m²/g (BET).

2. A particulate porous spherical titanium dioxide according to claim 1 with a particle size d50 in the range of 40 to 250 µm, in particular in the range of 60 to 150 µm, quite particularly in the range of 80 to 120 µm.

3. A particulate porous spherical titanium dioxide according to claim 1 or claim 2 with a pore size in the range of 1 to 30 nm, particularly 1 to 20 nm, quite particularly 4 to 20 nm.

4. A process for the production of a particulate porous spherical titanium dioxide according to one of claims 1 to 3 which includes the step of introducing an aqueous suspension with a content of 1 - 50% by weight of finely divided, highly surface area-rich titanium dioxide into a spray tower, wherein the conveyor speed of the suspension, the nozzle shape, the temperature and the air speed in the spray drier are so selected that individually separated/individual droplets of the suspension, that is to say without contact with 'adjacent droplets', of a size of 700 to 1200 µm, are introduced into the spray tower and dried.

5. A process for the production of a particulate porous spherical titanium dioxide according to claim 4 in which the spray drier is operated in a fountain configuration.

6. A process for the production of a particulate porous spherical titanium dioxide according to claim 4 or claim 5 in which the finely divided, highly surface area-rich titanium dioxide used has a high number of free hydroxyl groups, generally more than 10 OH groups/nm², advantageously more than 20 OH groups/nm², at the surface of the suspension particles.

7. Use of the particulate porous spherical titanium dioxide according to one of claims 1 to 3 in multi-phase systems.

8. Use of the particulate porous spherical titanium dioxide according to claim 7 as a carrier for active substances.

## Revendications

1. Dioxyde de titane sous forme de particules sphériques poreuses présentant une teneur en TiO₂ d'au moins 99,0 % en poids et présentant
- une taille de particules d₅₀ dans l'intervalle allant de 30 à 350 µm,
- une distribution de tailles de particules B(90/10) dans l'intervalle allant jusqu'à 120 µm,
- un diamètre poreux allant de 1 à 30 nm,
- un volume poreux d'au moins 0,1 cm³/g, et
- une surface spécifique BET allant de 30 à 300 m²/g.

2. Dioxyde de titane sous forme de particules sphériques poreuses selon la revendication 1, présentant une taille de particules d₅₀ dans l'intervalle allant de 40 à 250 µm, en particulier dans l'intervalle allant de 60 à 150 µm, tout particulièrement dans l'intervalle allant de 80 à 120 µm.

3. Dioxyde de titane sous forme de particules sphériques poreuses selon la revendication 1 ou 2, présentant un diamètre poreux dans l'intervalle allant de 1 à 30 nm, en particulier allant de 1 à 20 nm, tout particulièrement allant de 4 à 20 nm.

4. Procédé de synthèse d'un dioxyde de titane sous forme de particules sphériques poreuses selon l'une des revendications 1 à 3, lequel comprend l'étape consistant à faire entrer une suspension aqueuse présentant une teneur en dioxyde de titane finement divisé à grande surface spécifique de 1 à 50 % en poids dans une tour d'atomisation, où la vitesse de transport de la suspension, la forme des buses, la température et la vitesse de l'air dans l'atomiseur sont telles que des gouttelettes isolées ou seules de la suspension, c'est-à-dire sans contact avec des gouttelettes voisines, d'une taille allant de 700 à 1 200 µm entre dans la tour d'atomisation et est séchée.

5. Procédé de synthèse d'un dioxyde de titane sous forme de particules sphériques poreuses selon la revendication 4, dans lequel l'atomiseur de séchage est exploité selon une configuration de fontaine.

6. Procédé de synthèse d'un dioxyde de titane sous forme de particules sphériques poreuses selon la revendication 4 ou 5, dans lequel le dioxyde de titane finement divisé à grande surface spécifique introduit présente un grand nombre de groupements hydroxyles libres, en règle générale plus de 10 groupements OH/nm², de manière avantageuse plus de 20 groupements OH/nm² à la surface des particules de la suspension.

7. Utilisation d'un dioxyde de titane sous forme de particules sphériques poreuses selon l'une des revendications 1 à 3, dans des systèmes à plusieurs phases.

8. Utilisation d'un dioxyde de titane sous forme de particules sphériques poreuses selon la revendication 7, en tant que support pour substances actives.
